# EUROPÄISCHE PATENTSCHRIFT

(11) **EP 3 457 017 B1**
(45) Veröffentlichungstag und Bekanntmachung des Hinweises auf die Patenterteilung: **06.11.2019**
(21) Anmeldenummer: 17191876.6
(22) Anmeldetag: 19.09.2017
(51) Int. Cl.: F16L 57/00, B65D 41/10

(54) **VORRICHTUNG ZUR MONTAGE VON MINDESTENS EINER LEITUNG AN EINEM EINE DURCHGANGSÖFFNUNG AUFWEISENDEN BAUTEIL**
DEVICE FOR ATTACHING AT LEAST ONE LINE TO A COMPONENT WITH AN OPENING
DISPOSITIF DE MONTAGE D'AU MOINS UN CONDUIT SUR UN COMPOSANT COMPORTANT UNE OUVERTURE DE PASSAGE

(43) Veröffentlichungstag der Anmeldung: 20.03.2019
(73) Patentinhaber: Schafhuber, Walter, 1120 Wien (AT)
(72) Erfinder: Schafhuber, Walter, 1120 Wien (AT)
(74) Vertreter: KLIMENT & HENHAPEL

(56) Entgegenhaltungen:
- DE-A1- 4 240 067
- DE-U1- 7 819 986
- US-A- 1 771 522
- US-A- 1 774 569

## Beschreibung

### GEBIET DER ERFINDUNG

Die vorliegende Erfindung betrifft eine Vorrichtung zur Montage von mindestens einer Leitung, insbesondere Rohrleitung, an einem eine Durchgangsöffnung aufweisenden Bauteil, wobei das Bauteil ein Ständerprofil ist, wobei die Vorrichtung einen plattenförmigen Basiskörper mit einer sich in einer Durchführungsöffnungsebene erstreckenden Durchführungsöffnung umfasst und wobei mindestens ein Befestigungsmittel vorgesehen ist, um die Vorrichtung derart am Bauteil zu befestigten, dass der Basiskörper zumindest abschnittsweise am Bauteil aufliegt und in einer normal auf die Durchführungsöffnungsebene stehenden Normalrichtung gesehen die Durchführungsöffnung zumindest abschnittsweise innerhalb der Durchgangsöffnung angeordnet ist und wobei das mindestens eine Befestigungsmittel mindestens ein Befestigungselement umfasst, welches in einem die Durchführungsöffnung berandenden Begrenzungsbereich des Basiskörpers und vom Basiskörper abstehend angeordnet ist, um die Vorrichtung derart am Bauteil zu befestigten, dass das mindestens eine Befestigungselement zumindest abschnittsweise innerhalb der Durchgangsöffnung angeordnet ist, wobei das mindestens eine Befestigungselement als elastischer Befestigungshaken ausgeführt ist, der zur Befestigung der Vorrichtung am Bauteil mit diesem verrastbar ist.

### STAND DER TECHNIK

Häufig müssen Leitungen an Durchgangsöffnungen aufweisenden Bauteilen montiert werden, wobei die Leitungen dabei insbesondere durch die jeweilige Durchgangsöffnung geführt bzw. in der jeweiligen Durchgangsöffnung angeordnet werden müssen. Bei den Leitungen kann es sich z.B. um elektrische Leitungen, insbesondere in Form von Kabeln, handeln. Es sind aber beispielsweise auch flexible oder starre Rohrleitungen für einzelne Drähte oder aber als Wasser- bzw. Abwasserleitungen denkbar. Bei den Bauteilen kann es sich insbesondere um Bauteile zur Herstellung von Wänden im Trockenbau handeln, beispielsweise um Ständerprofile, an die Platten, insbesondere Gipskartonplatten, geschraubt werden. Solche Ständerprofile können z.B. einen U-förmigen Querschnitt aufweisen.

Das Erzeugen der Durchgangsöffnungen geschieht oftmals reichlich unelegant und aufwendig mithilfe einer Flex, was Nachteile im Hinblick auf den Aufwand, auf die Stabilität der Ständerprofile bzw. der Bauteile sowie auf potentiell leitungsschädigende und eine Verletzungsgefahr darstellende scharfe Ecken und/oder Kanten der Durchgangsöffnungen aufweist. In diesem Zusammenhang ist aus der EP 2883658 A2 ein Aufsatz für eine Pressvorrichtung bekannt, mit dem extrem effizient geometrisch perfekte Löcher bzw. Durchgangsöffnungen in das jeweilige Bauteil gestanzt werden können.

Doch selbst in diesem Fall ist es, da die Bauteile bzw. Ständerprofile typischerweise aus einem relativ dünnen Metall gefertigt sind, unvermeidbar, dass die Durchgangsöffnungen nach ihrer Herstellung Kanten mit einer gewissen Schärfe aufweisen, sodass die Kanten Leitungen, die durch die jeweilige Durchgangsöffnung geführt sind und auf der jeweiligen Kante aufliegen, beschädigen können.

Die Situation wird weiter verschärft, wenn die Leitungen sich in der Durchgangsöffnung bewegen können. Die Bewegung kann sodann zu einem Aufscheuern und so zu einer Beschädigung der in der Durchgangsöffnung angeordneten Leitungen führen. Derartige Bewegungen treten relativ häufig auf, insbesondere während andauernder Montagearbeiten, weil die Leitungen typischerweise nicht ordentlich am Bauteil fixiert werden können.

Die Druckschrift US 1 774 569 A beschreibt einen Gewindeschutz für Rohre mit innen- oder außenliegendem Gewinde. Zur Befestigung des Gewindeschutzes am Gewinde dienen Stopfen.

Die Druckschrift US 1 771 522 A zeigt einen Gewindeschutz für Rohre mit Gewinde. Der Gewindeschutz wird mittels Zungen am Gewinde gehalten und dient zum Verschließen des Rohres, um es vor äußeren Einflüssen zu schützen.

Die Druckschrift DE 78 19 986 U1 offenbart ein Schutzelement aus Kunststoff zum Abdecken der Dichtseiten eines Hochdruckflansches. Das Schutzelement dient zum Verschließen der Öffnungen des Flansches, um diese vor äußeren Einflüssen zu schützen.

Die Druckschrift DE 42 40 067 A1 zeigt einen Schutzstopfen für Rohrkupplungen zum Schutz vor Verschmutzungen.

### AUFGABE DER ERFINDUNG

Es ist daher Aufgabe der vorliegenden Erfindung, eine Vorrichtung zur Verfügung zu stellen, mit der die oben genannten Nachteile vermieden werden können. Insbesondere soll die erfindungsgemäße Vorrichtung eine Montage der Leitungen ermöglichen, bei der die Leitungen vor scharfen Kanten der Durchgangsöffnungen geschützt sind. Vorzugsweise sollen die Leitungen so befestigt bzw. fixiert werden können, dass Beschädigungen der Leitungen durch ein Aufscheuern aufgrund von Bewegungen der Leitungen ausgeschlossen werden können.

### DARSTELLUNG DER ERFINDUNG

Die zugrundeliegende Idee zur Lösung der oben genannten Aufgabe besteht darin, eine kostengünstige Vorrichtung zu schaffen, die am Bauteil rasch und unkompliziert so befestigt werden kann, dass die zu befestigende Leitung nicht auf einer die Durchgangsöffnung begrenzenden, möglicherweise scharfen Kante aufliegt, sondern auf der Vorrichtung. Daher ist es bei einer Vorrichtung zur Montage von mindestens einer Leitung, insbesondere Rohrleitung, an einem eine Durchgangsöffnung aufweisenden Bauteil, wobei das Bauteil ein Ständerprofil ist, wobei die Vorrichtung einen plattenförmigen Basiskörper mit einer sich in einer Durchführungsöffnungsebene erstreckenden Durchführungsöffnung umfasst und wobei mindestens ein Befestigungsmittel vorgesehen ist, um die Vorrichtung derart am Bauteil zu befestigten, dass der Basiskörper zumindest abschnittsweise am Bauteil aufliegt und in einer normal auf die Durchführungsöffnungsebene stehenden Normalrichtung gesehen die Durchführungsöffnung zumindest abschnittsweise innerhalb der Durchgangsöffnung angeordnet ist und wobei das mindestens eine Befestigungsmittel mindestens ein Befestigungselement umfasst, welches in einem die Durchführungsöffnung berandenden Begrenzungsbereich des Basiskörpers und vom Basiskörper abstehend angeordnet ist, um die Vorrichtung derart am Bauteil zu befestigten, dass das mindestens eine Befestigungselement zumindest abschnittsweise innerhalb der Durchgangsöffnung angeordnet ist, wobei das mindestens eine Befestigungselement als elastischer Befestigungshaken ausgeführt ist, der zur Befestigung der Vorrichtung am Bauteil mit diesem verrastbar ist, erfindungsgemäß vorgesehen, dass der mindestens eine Befestigungshaken dazu eingerichtet ist, einen Rand der Durchgangsöffnung zumindest abschnittsweise zu umgreifen, und dass der mindestens eine Befestigungshaken mit dem Basiskörper einstückig aus Kunststoff gefertigt ist.

Wie bereits erwähnt, kann es sich bei der Leitung bzw. bei den Leitungen z.B. um elektrische Leitungen in Form von Kabeln handeln. Es ist aber beispielsweise auch mindestens eine flexible oder starre Rohrleitung für einzelne Drähte oder aber für Fluide denkbar. Letzteres umfasst insbesondere Wasser-, Abwasser- oder Heizungsrohrleitungen, es sind aber auch Leitungen für Gase wie z.B. Luft- bzw. Lüftungsleitungen denkbar.

Wie ebenfalls bereits erwähnt, kann es sich bei den Bauteilen insbesondere um Bauteile zur Herstellung von Wänden im Trockenbau handeln, beispielsweise um Ständerprofile, an die Platten, insbesondere Gipskartonplatten, geschraubt werden. Solche Ständerprofile können z.B. einen U-förmigen Querschnitt aufweisen und sind üblicherweise aus Metall gefertigt.

Die plattenförmige Ausführung des Basiskörpers ermöglicht ein flächiges und damit stabilitätsförderndes Anliegen der Vorrichtung am Bauteil. Vorzugsweise liegt der Basiskörper mit einer Rückseite am Bauteil auf, wenn die Vorrichtung am Bauteil befestigt ist. Besonders bevorzugt liegt dabei im Wesentlichen die gesamte Rückseite des Basiskörpers am Bauteil auf.

Eine Plattenebene, in der sich der Basiskörper erstreckt, ist parallel zur Durchführungsöffnungsebene. Wenn die Vorrichtung am Bauteil befestigt ist, ist die Durchführungsöffnungsebene vorzugsweise parallel zu einer Durchgangsöffnungsebene, in der sich die Durchgangsöffnung erstreckt.

Gemäß den obigen Ausführungen ist die Vorrichtung derart ausgelegt, dass beim Befestigen der Vorrichtung am Bauteil in Normalrichtung gesehen die Durchführungsöffnung zumindest abschnittsweise innerhalb der Durchgangsöffnung anordenbar ist.

Indem in Normalrichtung gesehen die Durchführungsöffnung zumindest abschnittsweise, vorzugsweise vollständig, innerhalb der Durchgangsöffnung angeordnet ist, wenn die Vorrichtung am Bauteil befestigt ist, wird eine Durchführung der mindestens einen Leitung sowohl durch die Durchführungsöffnung als auch durch die Durchgangsöffnung ermöglicht. Da die mindestens eine Leitung dabei durch die Durchführungsöffnung geführt ist, kann die mindestens eine Leitung auf der Vorrichtung aufliegen. D.h. eine direkte Kontaktierung der mindestens einen Leitung mit dem Bauteil, insbesondere mit einer die Durchgangsöffnung begrenzenden scharfen Kante kann vermieden werden.

Theoretisch ermöglicht die erfindungsgemäße Vorrichtung auch, dass die jeweilige Leitung nicht durch die Durchgangsöffnung geführt, sondern nur an der Vorrichtung fixiert wird, um so die mindestens eine Leitung am Bauteil zu befestigen. D.h. die Vorrichtung erweitert die Möglichkeiten zur Befestigung der mindestens einen Leitung am Bauteil drastisch.

Durch eine geeignete Materialwahl der Vorrichtung, insbesondere des Basiskörpers, kann die Gefahr einer Beschädigung der mindestens einen Leitung weiter reduziert werden, wenn die mindestens eine Leitung auf der Vorrichtung aufliegt bzw. diese kontaktiert. Entsprechend kann die erfindungsgemäße Vorrichtung, insbesondere der Basiskörper, aus Kunststoff bzw. Plastik gefertigt sein. Ein weiterer Vorteil dieser Materialwahl ist eine sehr kostengünstige Herstellungsmöglichkeit, z.B. als Spritzgussteil. Außerdem können bei einer erfindungsgemäßen Vorrichtung aus Kunststoff bzw. Plastik besonders leicht elastische Befestigungsmittel bereitgestellt werden, was die Befestigung der Vorrichtung am Bauteil erleichtern bzw. beschleunigen kann.

Grundsätzlich sind unterschiedlichste geeignete Befestigungsmittel denkbar. Es ist vorgesehen, dass das mindestens eine Befestigungsmittel mindestens ein Befestigungselement umfasst, welches in einem die Durchführungsöffnung berandenden Begrenzungsbereich des Basiskörpers und vom Basiskörper abstehend angeordnet ist, um die Vorrichtung derart am Bauteil zu befestigten, dass das mindestens eine Befestigungselement zumindest abschnittsweise innerhalb der Durchgangsöffnung angeordnet ist.

D.h. das mindestens eine Befestigungselement ist auch in Normalrichtung gesehen innerhalb der Durchgangsöffnung angeordnet, wenn die Vorrichtung am Bauteil befestigt ist. Vorzugsweise steht das mindestens eine Befestigungselement von der Rückseite des Basiskörpers ab.

Durch die vom Basiskörper abstehende Anordnung des mindestens einen Befestigungselements, kann dieses zur Befestigung der Vorrichtung am Bauteil einfach in die Durchgangsöffnung eingeführt werden, was eine Vielzahl von sehr schnell herzustellenden Befestigungsarten ermöglicht.

Bevorzugt sind mehrere Befestigungselemente vorgesehen, besonders bevorzugt vier.

Ein besonders stabiler Halt der Vorrichtung am Bauteil kann erzielt werden, indem das mindestens eine Befestigungselement einen Rand der Durchgangsöffnung zumindest abschnittsweise umgreift. Eine derartige Befestigung kann das Abziehen der Vorrichtung vom Bauteil durch eine parallel zur Normalrichtung wirkende Kraft verhindern oder zumindest sehr erschweren. Entsprechend ist es bei der erfindungsgemäßen Vorrichtung vorgesehen, dass das mindestens eine Befestigungselement als elastischer Befestigungshaken ausgeführt ist, der zur Befestigung der Vorrichtung am Bauteil, vorzugsweise mit diesem, verrastbar ist.

Der mindestens eine Befestigungshaken greift den Rand der Durchgangsöffnung zumindest abschnittsweise im verrasteten Zustand um.

Die Elastizität ermöglicht eine besonders einfache und extrem rasche Befestigung der Vorrichtung am Bauteil, indem die Vorrichtung einfach auf das Bauteil so aufgeschoben wird, dass der oder die Befestigungshaken innerhalb der Durchgangsöffnung angeordnet wird bzw. werden. Das Aufschieben geschieht dabei gegen den elastischen Widerstand des mindestens einen Befestigungshakens.

Gemäß dem oben Gesagten eignet sich Kunststoff bzw. Plastik besonders gut als Material für eine derartige Ausführungsform der erfindungsgemäßen Vorrichtung, da hierdurch die erforderliche Elastizität des mindestens einen Befestigungshakens leicht gewährleistet werden kann. Außerdem kann die Vorrichtung kostengünstig einstückig hergestellt werden.

Es ist auch denkbar, dass der mindestens eine Befestigungshaken mit einem weiteren Befestigungsmittel verrastet, sodass nicht notwendigerweise ein Umgreifen des Rands der Durchgangsöffnung im befestigten Zustand gegeben ist. Das weitere Befestigungsmittel wäre dann hinter dem Bauteil angeordnet bzw. wäre das Bauteil zumindest abschnittsweise zwischen dem Basiskörper und dem weiteren Befestigungsmittel angeordnet.

Bei einer bevorzugten Ausführungsform der erfindungsgemäßen Vorrichtung ist vorgesehen, dass das mindestens eine Befestigungsmittel mindestens ein Positionierelement umfasst, welches in einem die Durchführungsöffnung berandenden Begrenzungsbereich des Basiskörpers und vom Basiskörper abstehend angeordnet und zumindest zur Positionierung des Basiskörpers am Bauteil vorgesehen ist, wobei beim Befestigen der Vorrichtung am Bauteil das mindestens eine Positionierelement zumindest abschnittsweise innerhalb der Durchgangsöffnung anordenbar ist.

Vorzugsweise steht das mindestens eine Positionierelement von der Rückseite des Basiskörpers ab.

Bevorzugt sind mehrere Positionierelemente vorgesehen, besonders bevorzugt vier.

Vorzugsweise ist das mindestens eine Positionierelement in Normalrichtung gesehen vollständig innerhalb der Durchgangsöffnung angeordnet, wenn die Vorrichtung am Bauteil befestigt ist.

Das mindestens eine Positionierelement wird beim Befestigen der Vorrichtung am Bauteil in die Durchgangsöffnung eingeführt und bewirkt durch Formschluss mit dem bzw. durch ein Anstoßen am Rand der Durchgangsöffnung eine perfekte Positionierung der Vorrichtung am Bauteil. Dabei wird garantiert, dass in Normalrichtung gesehen die Durchführungsöffnung zumindest abschnittsweise, vorzugsweise vollständig, innerhalb der Durchgangsöffnung angeordnet ist.

Entsprechend müssen die Größe und/oder die Dimensionierung des mindestens einen Positionierelements auf die Geometrie, insbesondere die Dimensionierung, der Durchgangsöffnung abgestimmt sein. Insbesondere wenn die Durchgangsöffnungen mit einer Pressvorrichtung gemäß der EP 2883658 A2 durch Stanzen hergestellt worden sind, ist dies leicht möglich, da dann die Geometrien bzw. die Abmessungen der Durchgangsöffnungen genauestens im Vorhinein bekannt sind.

Das mindestens eine Positionierelement kann je nach Dimensionierung auch alleine zur Befestigung dienen. Insbesondere wenn das mindestens eine Positionierelement z.B. besonders weit vom Basiskörper absteht, kann es auch weit über das Bauteil hinaus abstehen, wenn es in der Durchgangsöffnung angeordnet ist, was mitunter genügen kann, um die Vorrichtung am Bauteil zu halten. Zudem kann eine laterale Dimensionierung - d.h. die Dimensionierung in einer Ebene parallel zur Durchführungsöffnungsebene - so gewählt sein, dass das mindestens eine Positionierelement kraftschlüssig - im weitesten Sinne mittels eines Presssitzes - in der Durchgangsöffnung gehalten ist. Um eine kraftschlüssige Verbindung besonders leicht und rasch herstellen zu können, kann das mindestens eine Positionierelement z.B. konisch ausgelegt sein, sodass die Vorrichtung mit dem mindestens einen Positionierelement einfach soweit in die Durchgangsöffnung eingeschoben wird, bis eine kraftschlüssige Verbindung bzw. eine Klemmverbindung hergestellt ist.

Um eine besonders genaue und stabile Positionierung der Vorrichtung zu gewährleisten, ist es bei einer besonders bevorzugten Ausführungsform der erfindungsgemäßen Vorrichtung vorgesehen, dass das mindestens eine Positionierelement die Form eines Ringsegments aufweist. Auf diese Weise kann das mindestens eine Positionierelement über einen weiten Bereich am Rand der Durchgangsöffnung anliegen, insbesondere wenn es sich um eine im Wesentlichen kreisförmige oder abschnittsweise kreisförmige Durchgangsöffnung handelt.

Alternativ oder zusätzlich zu den bereits geschilderten Befestigungsmitteln ist es bei einer bevorzugten Ausführungsform der erfindungsgemäßen Vorrichtung vorgesehen, dass das mindestens eine Befestigungsmittel mindestens eine Schraube umfasst und dass zur Aufnahme der mindestens einen Schraube mindestens ein Loch im Basiskörper vorgesehen ist. Hierdurch kann eine alternative oder zusätzliche Schraubverbindung der Vorrichtung mit dem Bauteil erzeugt werden.

Bevorzugt sind mehrere Schrauben und Löcher vorgesehen, besonders bevorzugt jeweils drei.

Die Verwendung mindestens einer Schraube erlaubt eine mechanisch besonders stabile Befestigung der Vorrichtung am Bauteil. Dabei sind viele unterschiedliche Variationen denkbar, beispielsweise eine direkte Verschraubung der Vorrichtung mit dem Bauteil, z.B. unter Verwendung von Blechschrauben, die in einfache Löcher - d.h. in Löcher ohne Gewinde - des Bauteils eingreifen.

Es können aber auch Innengewinde in den Löchern des Basiskörpers vorgesehen sein, die als Gegengewinde für die Schrauben, insbesondere Metallschrauben, fungieren. Die (Metall-)Schrauben können dann in einfache Löcher des Bauteils und anschließend in die Löcher des Basiskörpers gesteckt werden, um dann in Eingriff mit den Innengewinden stehend festgezogen zu werden.

Oder es sind sowohl im Basiskörper als auch im Bauteil nur einfache Löcher vorgesehen, durch die die Schrauben zur Befestigung der Vorrichtung am Bauteil geführt werden. Zur Fixierung bzw. zum Festziehen sind dann weitere Teile, z.B. Muttern, vorgesehen, mit denen die Schrauben in Eingriff gebracht werden.

Alternativ oder zusätzlich zu den bereits geschilderten Befestigungsmitteln ist es bei einer bevorzugten Ausführungsform der erfindungsgemäßen Vorrichtung vorgesehen, dass das mindestens eine Befestigungsmittel eine Verbindungsplatte umfasst, die mit dem Basiskörper unter zumindest abschnittsweiser Zwischenlage des Bauteils verbindbar, vorzugsweise verschraubbar, ist, um die Vorrichtung am Bauteil zu fixieren.

Die Verbindungsplatte kann dabei auch mit anderen, insbesondere den oben genannten, Befestigungsmitteln zusammenwirken. Beispielsweise kann der Basiskörper mit der Verbindungsplatte verschraubt werden. Oder die Verbindungsplatte wirkt z.B. mit dem mindestens einen elastischen Befestigungshaken zusammen, indem letzterer mit bzw. in der Verbindungsplatte verrastet, um die Vorrichtung am Bauteil zu befestigen.

Es sei bemerkt, dass bei Verwendung der Verbindungsplatte nicht notwendigerweise Löcher im Bauteil erzeugt werden müssen. Dies gilt selbst dann, wenn die Verbindungsplatte mit dem Basiskörper verschraubt wird, da die Verschraubung theoretisch auch seitlich bzw. außerhalb vom Bauteil erfolgen kann.

Bei einer bevorzugten Ausführungsform der erfindungsgemäßen Vorrichtung ist vorgesehen, dass zur Auflage der mindestens einen Leitung ein Vorsprung vorgesehen ist, der zumindest abschnittsweise in einem die Durchführungsöffnung berandenden Begrenzungsbereich des Basiskörpers angeordnet ist und von einer Vorderseite des Basiskörpers absteht.

Der Vorsprung kann einstückig mit dem Basiskörper ausgebildet sein oder als vom Basiskörper separates Bauteil. In letzterem Fall kann der Vorsprung mit dem Basiskörper verbunden bzw. an diesem befestigt werden.

Bei Vorhandensein mindestens eines Befestigungselements und/oder Positionierelements weist der Vorsprung von diesem vorzugsweise weg.

Der Vorsprung, insbesondere eine Oberseite des Vorsprungs, kann eine auf der Vorrichtung für die Auflage der mindestens einen Leitung zur Verfügung stehende Fläche beträchtlich vergrößern, was die Gefahr von Beschädigungen der mindestens einen Leitung weiter reduziert. Weiters kann die Form, insbesondere Krümmung, des Vorsprungs bzw. der Oberseite des Vorsprungs zumindest abschnittsweise an jene der mindestens einen Leitung angepasst sein, sodass sich eine besonders großflächige Auflage ergibt.

Darüberhinaus kann die mindestens eine Leitung selbst dann am Vorsprung, insbesondere auf der Oberseite des Vorsprungs, bequem aufgelegt und mit der Vorrichtung verbunden werden, wenn sie nicht durch die Durchgangsöffnung bzw. die Durchführungsöffnung geführt wird.

Schließlich erweitert der Vorsprung die Möglichkeiten, die mindestens eine Leitung an der Vorrichtung zu fixieren. Hierzu ist es bei einer besonders bevorzugten Ausführungsform der erfindungsgemäßen Vorrichtung vorgesehen, dass ein Haltemittel, insbesondere eine Öse, für ein Befestigungsband am Vorsprung angeordnet ist, wobei die mindestens eine Leitung an der Vorrichtung mittels des Befestigungsbands befestigbar ist.

Als Befestigungsband kommen z.B. ein Kabelbinder oder ein Klettverschlussband oder ein einfaches verknotbares Seil in Frage. Es wäre aber z.B. auch ein elastisches Band, beispielsweise ein Gummiband, als Befestigungsband denkbar. Je nach Ausführung kann das Befestigungsband einmalig oder mehrere Male verwendet werden. Letzteres kann sich als vorteilhaft erweisen, wenn sich z.B. nach dem Fixieren einer Leitung herausstellt, dass noch eine weitere Leitung befestigt bzw. fixiert werden muss.

Das Haltemittel braucht entsprechend nicht unbedingt eine Öse zu sein, durch die das Befestigungsband gefädelt wird. Denkbar wäre z.B. auch einfach ein Absatz im Vorsprung oder eine Art Klammer mit der das Befestigungsband in Eingriff gebracht wird. Weiters könnte es sich beim Haltemittel z.B. auch um einen Druckverschlussteil handeln, wobei das Befestigungsband ein passendes Druckverschlussteilgegenstück - z.B. einen Druckknopf - aufweist, welches mit dem Druckverschlussteil in Eingriff gebracht werden kann, um das Befestigungsband mit dem Vorsprung und damit - indirekt - mit dem Basiskörper zu verbinden.

Der Vorsprung bietet eine besonders bequeme Möglichkeit der Befestigung des Befestigungsbands. Ein Befestigungsband kann freilich auch unabhängig vom Vorsprung vorgesehen sein, um eine Fixierung der mindestens einen Leitung an der Vorrichtung zu ermöglichen.

Jedenfalls ist es bei einer bevorzugten Ausführungsform der erfindungsgemäßen Vorrichtung vorgesehen, dass die Vorrichtung ein Befestigungsband umfasst, wobei die Leitung an der Vorrichtung mittels des Befestigungsbands befestigbar ist, und dass das Befestigungsband, vorzugsweise lösbar, mit dem Basiskörper verbunden ist.

Die Verbindung des Befestigungsbands mit dem Basiskörper kann auch, wie bereits erwähnt, indirekt, insbesondere über den Vorsprung, erfolgen.

Zur lösbaren Verbindung des Befestigungsbands mit dem Basiskörper kann das Befestigungsband insbesondere als einfaches verknotbares Seil oder als Klettverschlussband ausgeführt sein, wobei das Befestigungsband z.B. durch eine Öse, die beispielsweise am Basiskörper angeordnet ist, geführt ist.

Es ist aber auch denkbar, dass das Befestigungsband mit dem Basiskörper unlösbar verbunden, beispielsweise verklebt oder vernietet, ist. Insbesondere wenn die Vorrichtung aus Kunststoff bzw. Plastik gefertigt ist, wäre es auch denkbar, dass das Befestigungsband einstückig mit dem Basiskörper hergestellt ist.

Um bei Vorhandensein des Vorsprungs einerseits eine besonders hohe Stabilität und hohe Haltekräfte für die mindestens eine Leitung und andererseits eine bequeme Handhabung zu ermöglichen, ist es bei einer besonders bevorzugten Ausführungsform der erfindungsgemäßen Vorrichtung vorgesehen, dass eine Breite des Befestigungsbands mindestens 50%, vorzugsweise mindestens 66%, einer Breite des Vorsprungs beträgt, wobei sich der Vorsprung mit seiner Breite in der Normalrichtung vom Basiskörper weg erstreckt.

Gemäß dem oben Gesagten erstreckt sich der Vorsprung mit seiner Breite in der Normalrichtung von der Vorderseite des Basiskörpers weg.

Aufgrund der genannten Dimensionierung kann die mindestens eine Leitung mittels des Befestigungsbands satt am Vorsprung anliegend befestigt bzw. fixiert werden.

Zur Erleichterung der Durchführung der mindestens einen Leitung durch die Durchführungsöffnung ist es bei einer bevorzugten Ausführungsform der erfindungsgemäßen Vorrichtung vorgesehen, dass die Durchführungsöffnung kreisförmig ist. Dies ist unabhängig von der konkreten Form der Durchgangsöffnung, d.h. letztere kann von der Kreisform auch abweichen.

Um die Auflage der mindestens einen Leitung auf der Vorrichtung zu verbessern und somit die Beschädigungsgefahr für die Leitung weiter zu reduzieren, ist es bei einer bevorzugten Ausführungsform der erfindungsgemäßen Vorrichtung vorgesehen, dass die Durchführungsöffnung zumindest abschnittsweise von einer Auflagefläche für die Leitung berandet ist. Diese Auflagefläche kann zumindest abschnittsweise eine Form, insbesondere Krümmung, aufweisen, die an jene der mindestens einen Leitung angepasst ist, um eine besonders großflächige Auflage zu ermöglichen.

Weiters kann bei Vorhandensein des Vorsprungs vorgesehen sein, dass die Auflagefläche in den Vorsprung, insbesondere in dessen Oberseite, übergeht, um die Auflage der mindestens einen Leitung auf der Vorrichtung weiter zu verbessern.

Wie bereits geschildert, eignet sich die erfindungsgemäße Vorrichtung insbesondere zur Befestigung an Bauteilen, in welche Durchgangsöffnungen mittels einer Pressvorrichtung gemäß der EP 2883658 A2 gestanzt worden sind. Entsprechend ist erfindungsgemäß ein System mit einer erfindungsgemäßen Vorrichtung und dem Bauteil vorgesehen, wobei die Durchgangsöffnung gestanzt ist.

Insbesondere wenn die erfindungsgemäße Vorrichtung den oder die oben beschriebenen Befestigungshaken aufweist, erlaubt die wohldefinierte Form der gestanzten Durchgangsöffnung eine perfekte Verrastung der Vorrichtung am Bauteil, was eine extrem einfache, rasche und zuverlässige Montage sicherstellt.

Grundsätzlich können durch Stanzen Durchgangsöffnungen in unterschiedlichsten Formen exakt und reprozierbar erzeugt werden. Wie geschildert, kann die erfindungsgemäße Vorrichtung entsprechend für die jeweilige vorbekannte Form und/oder Größe der Durchgangsöffnungen ausgelegt sein. In der Praxis erweist sich dabei eine Kreisform der Durchgangsöffnungen als universellste Lösung, die für unterschiedlichste Leitungen verwendbar ist. Daher ist es bei einer bevorzugten Ausführungsform des erfindungsgemäßen Systems vorgesehen, dass die Durchgangsöffnung kreisförmig ist.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine axonometrische Ansicht einer erfindungsgemäßen Vorrichtung mit Blick auf eine Vorderseite eines Basiskörpers der Vorrichtung
- Fig. 2: eine axonometrische Ansicht der Vorrichtung aus Fig. 1 mit Blick auf eine Rückseite des Basiskörpers
- Fig. 3: eine Seitenansicht der Vorrichtung aus Fig. 1
- Fig. 4: eine Frontansicht der Vorrichtung aus Fig. 1 mit Blick auf die Vorderseite
- Fig. 5: eine axonometrische Ansicht der Vorrichtung aus Fig. 1, mittels der eine Rohrleitung an einem Ständerprofil befestigt ist
- Fig. 6: eine axonometrische Ansicht eines Basiskörpers einer weiteren Ausführungsform der erfindungsgemäßen Vorrichtung mit Blick auf die Vorderseite des Basiskörpers
- Fig. 7: eine axonometrische Ansicht des Basiskörpers aus Fig. 6 mit Blick auf dessen Rückseite
- Fig. 8: eine axonometrische Ansicht eines als separates Bauteil ausgeführten Vorsprungs der weiteren Ausführungsform der erfindungsgemäßen Vorrichtung mit Blick auf eine Vorderseite eines Befestigungsabschnitts des Vorsprungs
- Fig. 9: eine axonometrische Ansicht des Vorsprungs aus Fig. 8 mit Blick auf eine Rückseite des Befestigungsabschnitts
- Fig. 10: eine Seitenansicht des Vorsprungs aus Fig. 8
- Fig. 11: eine axonometrische Ansicht der weiteren Ausführungsform der erfindungsgemäßen Vorrichtung, mittels der die Rohrleitung am Ständerprofil befestigt ist

### WEGE ZUR AUSFÜHRUNG DER ERFINDUNG

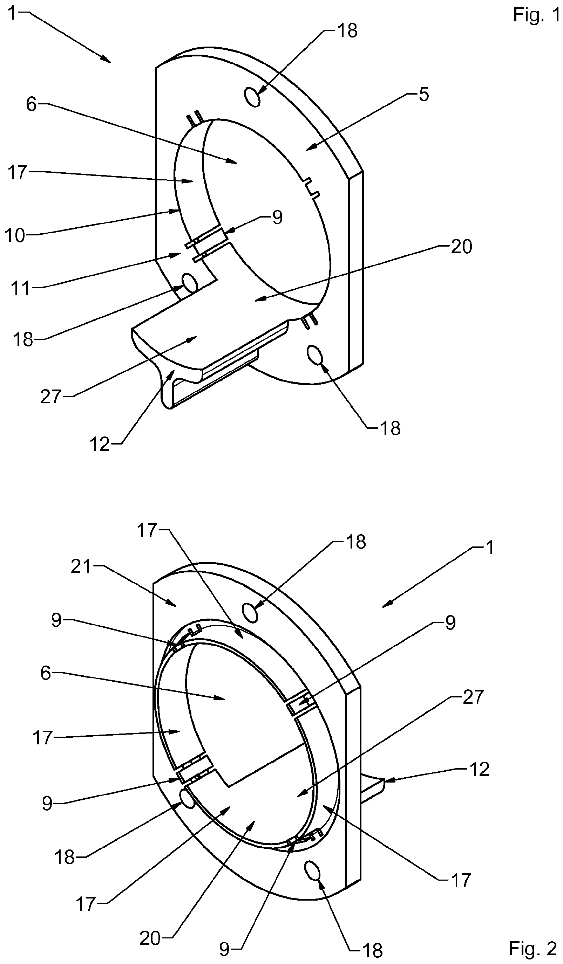

In Fig. 1 ist eine erfindungsgemäße Vorrichtung 1 zur Montage von mindestens einer Leitung, insbesondere Rohrleitung 2, an einem eine Durchgangsöffnung 4 aufweisenden Bauteil, insbesondere Ständerprofil 3 in axonometrischer Ansicht dargestellt. Im Folgenden ist exemplarisch als Leitung stets die Rohrleitung 2 genannt und als Bauteil stets das Ständerprofil 3. Die Rohrleitung 2 ist typischerweise aus Kunststoff gefertigt, das Ständerprofil 3 typischerweise aus Metall. Das Ständerprofil 3 weist üblicherweise einen im Wesentlichen U-förmigen Querschnitt mit zwei gegenüberliegenden Schenkeln und einem die beiden Schenkeln verbindenden Verbindungsabschnitt auf, wobei die Durchgangsöffnung 4 typischerweise im Verbindungsabschnitt angeordnet ist.

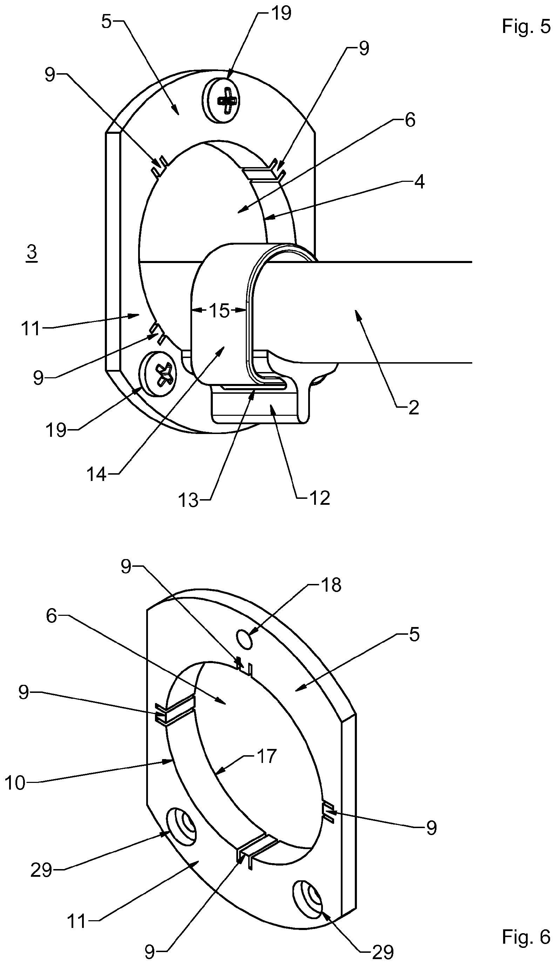

Ein solches Ständerprofil 3 mit einer kreisförmigen gestanzten Durchgangsöffnung 4 im Verbindungsabschnitt ist in Fig. 5 mit einer montierten Vorrichtung 1, an welcher wiederum eine Rohrleitung 2 befestigt ist, dargestellt. Das Ständerprofil 3 und die Vorrichtung 1 bilden dabei ein erfindungsgemäßes System aus.

Die Vorrichtung 1 weist einen plattenförmigen Basiskörper 5 auf, wobei in Fig. 1 eine Vorderseite 11 des Basiskörpers 5 sichtbar ist. Fig. 2 zeigt dieselbe Vorrichtung 1 ebenfalls in axonometrischer Ansicht, wobei jedoch die Blickrichtung so ist, dass eine Rückseite 21 des Basiskörpers 5 sichtbar ist, wobei die Rückseite 21 und die Vorderseite 11 voneinander weg weisen.

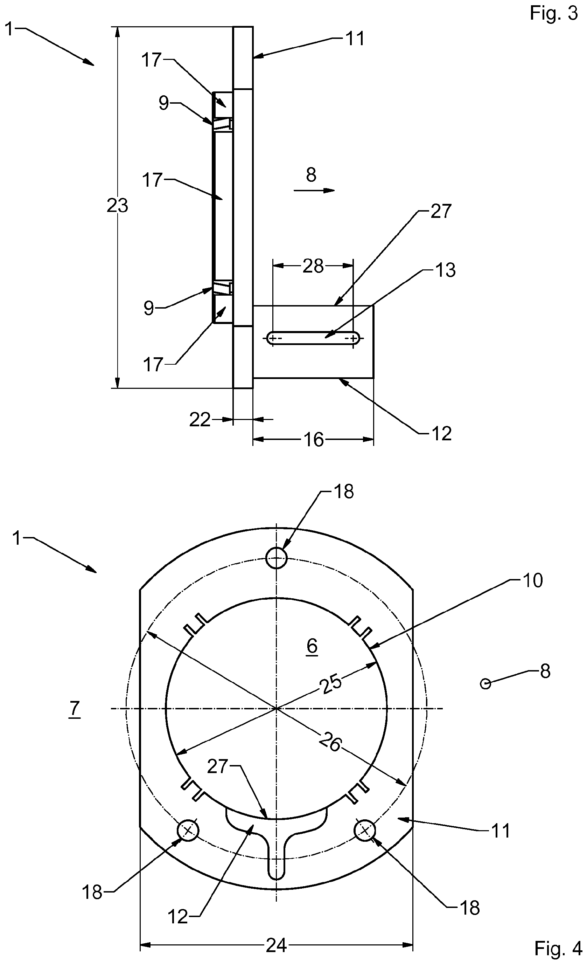

Der Basiskörper 5 weist eine Durchführungsöffnung 6 auf, die sich in den dargestellten Ausführungsbeispielen kreisförmig in einer Durchführungsöffnungsebene 7 erstreckt. In der Frontansicht der Fig. 4 liegt die Durchführungsöffnungsebene 7 in der Zeichenebene.

Es sind Befestigungsmittel vorgesehen, um die Vorrichtung 1 derart am Ständerprofil 3 zu befestigten, dass der Basiskörper 5, insbesondere die Rückseite 21, zumindest abschnittsweise am Ständerprofil 3 aufliegt und in einer normal auf die Durchführungsöffnungsebene 7 stehenden Normalrichtung 8 gesehen die Durchführungsöffnung 6 zumindest abschnittsweise innerhalb der Durchgangsöffnung 4 angeordnet ist. D.h. die Vorrichtung 1 ist so ausgelegt, dass beim Befestigen der Vorrichtung 1 am Ständerprofil 3 in Normalrichtung 8 gesehen die Durchführungsöffnung 6 zumindest abschnittsweise innerhalb der Durchgangsöffnung 4 anordenbar ist.

Hierzu umfassen die Befestigungsmittel in den gezeigten Ausführungsbeispielen vier elastische Befestigungshaken 9, die in einem die Durchführungsöffnung 6 berandenden Begrenzungsbereich 10 des Basiskörpers 5 und vom Basiskörper 5 abstehend angeordnet sind und beim Befestigen der Vorrichtung 1 innerhalb der Durchgangsöffnung 4 angeordnet werden. Die Elastizität der Befestigungshaken 9 ermöglicht eine besonders einfache und extrem rasche Befestigung der Vorrichtung 1 am Ständerprofil 3, indem die Vorrichtung 1 einfach auf das Ständerprofil 3 so aufgeschoben wird, dass die Befestigungshaken 9 innerhalb der Durchgangsöffnung 4 angeordnet werden. Dabei ist die Vorrichtung 1 so dimensioniert bzw. an die Dimension der Durchgangsöffnung 4 angepasst, dass die Befestigungshaken 9 das Ständerprofil 3 an einem Rand der Durchgangsöffnung 4 kontaktieren. Das Aufschieben geschieht gegen den elastischen Widerstand der Befestigungshaken 9, bis die Befestigungshaken 9 schließlich am Ständerprofil 3 verrasten, wobei sie den Rand der Durchgangsöffnung 4 abschnittsweise umgreifen. Mit anderen Worten wird die Vorrichtung 1 mittels der Befestigungshaken 9 einfach am Ständerprofil 3 bzw. an der Durchgangsöffnung 4 aufgeknipst. Ein Abziehen der Vorrichtung 1 vom Ständerprofil 3 durch eine parallel zur Normalrichtung 8 wirkende Kraft ist ab dann kaum mehr möglich.

Beim bzw. nach dem Befestigen der Vorrichtung 1 am Ständerprofil 3 sind die Befestigungshaken 9 in Normalrichtung 8 gesehen also abschnittsweise innerhalb der Durchgangsöffnung 4 angeordnet.

Die Befestigungshaken 9 sind in den dargestellten Ausführungsbeispielen mit dem Basiskörper 5 einstückig aus Kunststoff bzw. Plastik gefertigt, was nicht nur kostengünstig ist, sondern auch eine hinreichende Elastizität der Befestigungshaken 9 sicherstellt.

Um optional eine noch stabilere Fixierung der Vorrichtung 1 am Ständerprofil 3 zu ermöglichen, weist die Vorrichtung 1 in den gezeigten Ausführungsbeispielen drei Löcher 18 im Basiskörper 5 auf, durch die Schrauben 19 als weitere Befestigungsmittel geführt werden können. D.h. die Schrauben 19 ermöglichen eine zusätzliche Verschraubung der Vorrichtung 1 mit dem Ständerprofil 3, vgl. z.B. Fig. 5. Dabei kann die Verschraubung direkt mit dem Ständerprofil 3 erfolgen oder z.B. mittels einer Verbindungsplatte (nicht dargestellt), sodass das Ständerprofil 3 abschnittsweise zwischen der Verbindungsplatte und dem Basiskörper 5 angeordnet ist.

Um beim Aufschieben der Vorrichtung 1 eine optimale Positionierung zu ermöglichen, umfassen die Befestigungsmittel in den dargestellten Ausführungsbeispielen vier ringsegmentförmige Positionierelemente 17, die im Begrenzungsbereich 10 vom Basiskörper 5 abstehen. In den dargestellten Ausführungsbeispielen sind auch die Positionierelemente 17 einstückig mit dem Basiskörper 5 ausgebildet. Die Positionierelemente 17 sind dabei wie die Befestigungshaken 9 umfänglich um die Durchführungsöffnung 7 angeordnet, wobei zwischen zwei aufeinanderfolgenden Positionierelementen 17 ein Befestigungshaken 9 angeordnet ist und umgekehrt.

In den gezeigten Ausführungsbeispielen stehen die Befestigungshaken 9 in etwa gleich weit vom Basiskörper 5 bzw. von dessen Rückseite 21 ab wie die Positionierelemente 17. Prinzipiell sind aber auch andere Dimensionsverhältnisse zwischen den Befestigungshaken 9 und den Positionierelementen 17 möglich. Insbesondere wäre es auch denkbar, dass die Befestigungshaken 9 etwas weiter vom Basiskörper 5 bzw. von dessen Rückseite 21 abstehen als die Positionierelemente 17.

Die Positionierelemente 17 sind so dimensioniert, dass sie beim Aufschieben der Vorrichtung 1 auf das Ständerprofil 3 in die Durchgangsöffnung 4 eingeführt werden und den Rand der Durchgangsöffnung 4 kontaktieren, um durch diesen Formschluss die Durchführungsöffnung 6 perfekt über der Durchgangsöffnung 4 zu zentrieren. In den dargestellten Ausführungsbeispielen ist die Durchführungsöffnung 7 beim und nach dem Befestigen der Vorrichtung 1 am Ständerprofil 3 in Normalrichtung 8 gesehen vollständig innerhalb der Durchgangsöffnung 4 angeordnet.

Es ist daher ausgeschlossen, dass die Rohrleitung 2, wenn sie durch die Durchführungsöffnung 6 der am Ständerprofil 3 montierten Vorrichtung 1 geführt ist, mit dem Rand der Durchgangsöffnung 4 in Berührung kommen kann. D.h. die Rohrleitung 2 liegt ausschließlich auf der Vorrichtung 1 auf, insbesondere auf einer Auflagefläche 20 der Vorrichtung 1 bzw. des Basiskörpers 5. Diese Auflagefläche 20 berandet die Durchführungsöffnung 6.

Wie in der Seitenansicht der Fig. 3 erkennbar ist, weist der Basiskörper 5 eine Dicke 22 auf, die in Normalrichtung 8 gemessen wird und typischerweise im Bereich von 3 mm bis 10 mm liegt. Entsprechend ergibt sich eine zumindest gleichgroße - je nach Dimensionierung der Positionierelemente 17 und/oder der Befestigungshaken 9 ggf. auch deutlich größere - Dimensionierung der Auflagefläche 20 in Normalrichtung 8.

Es sei bemerkt, dass in den gezeigten Ausführungsbeispielen die Vorrichtung 1 außerdem so dimensioniert bzw. ausgelegt ist, dass auch kein Spalt zwischen der Durchgangsöffnung 4 und der Vorrichtung 1 verbleibt, wenn die Vorrichtung 1 am Ständerprofil 3 befestigt ist. Die gestanzte Durchgangsöffnung 4 weist einen Durchmesser auf, der typischerweise im Bereich von 30 mm bis 90 mm ist, z.B. 38 mm oder 58 mm oder 78 mm. Der Basiskörper 5 der Vorrichtung 1 ist entsprechend so dimensioniert, dass er sich parallel zur Durchführungsöffnungsebene 7 weiter erstreckt als der Durchmesser der Durchgangsöffnung 4 groß ist.

Für den Fall, dass der Durchmesser der Durchgangsöffnung 4 z.B. 58 mm beträgt, kann eine in Fig. 3 eingezeichnete Höhe 23 des Basiskörpers 5 beispielsweise 90 mm betragen. Wie in Fig. 4 erkennbar ist, kann eine Breite 24 des Basiskörpers 5 kleiner als die Höhe 23 ausgeführt sein, beispielsweise 68 mm, um die Verwendung der Vorrichtung 1 bei Ständerwänden 3 zu ermöglichen, deren Verbindungsabschnitt lediglich 75 mm breit ist. Die Durchführungsöffnung 6 weist in diesem Dimensionierungsbeispiel einen Durchmesser 25 von 55 mm auf. Die drei Löcher 18 liegen in diesem Dimensionierungsbeispiel auf einem Kreis (in Fig. 4 strichpunktiert angedeutet) mit einem Kreisdurchmesser 26 von 75 mm. In diesem Dimensionierungsbeispiel beträgt die Dicke 22 4 mm.

Wie in sämtlichen Figuren erkennbar ist, ist bei den dargestellten Ausführungsbeispielen der erfindungsgemäßen Vorrichtung 1 zur Auflage der Rohrleitung 2 neben der Auflagefläche 20 des Basiskörpers 5 ein Vorsprung 12 vorgesehen, der abschnittsweise im Begrenzungsbereich 10 angeordnet ist und von der Vorderseite 11 des Basiskörpers 5 absteht. Der Vorsprung 12 erstreckt sich dabei von der Vorderseite 11 in Normalrichtung 8 mit einer Breite 16, vgl. Fig. 3. Die Breite 16 liegt typischerweise im Bereich von 10 mm bis 40 mm und beträgt im oben angeführten Dimensionierungsbeispiel 30 mm.

Im Ausführungsbeispiel der Figuren 1 bis 5 ist der Vorsprung 12 einstückig mit dem Basiskörper 5 ausgebildet.

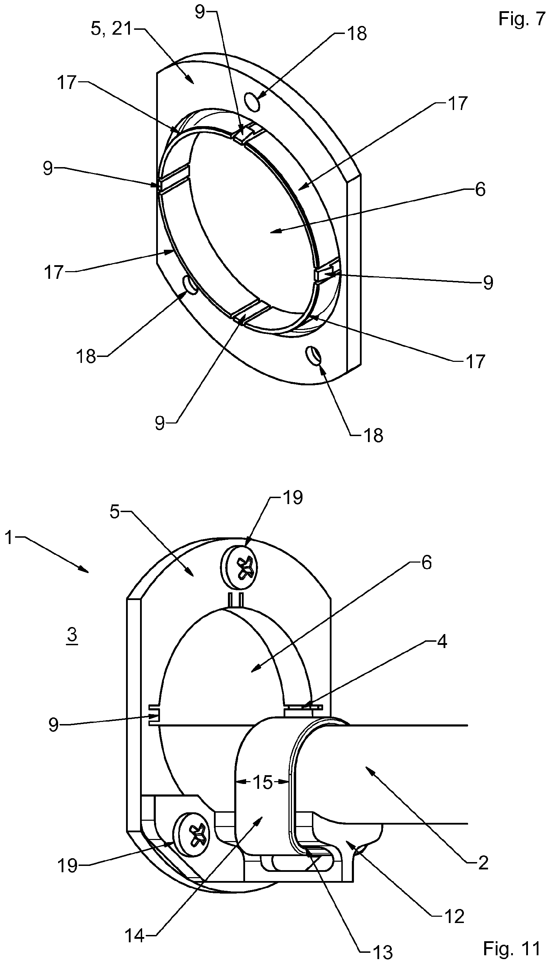

Im Ausführungsbeispiel der Figuren 6 bis 11 ist der Vorsprung 12 als vom Basiskörper 5 separates Bauteil ausgeführt. Zur Verbindung bzw. Befestigung des Vorsprungs 12 am Basiskörper 5 sind in diesem Fall zwei zylinderförmige Vertiefungen 29 an der Vorderseite 11 des Basiskörpers 5 vorgesehen, die jeweils in ein Loch 18 übergehen, vgl. Fig. 6 und Fig. 7. Der Vorsprung 12 weist einen Befestigungsabschnitt 33 auf, der wiederum eine Vorderseite 34 und eine gegenüberliegende Rückseite 35 umfasst. Im verbundenen Zustand (vgl. Fig. 11) liegt der Befestigungsabschnitt 33 mit seiner Rückseite 35 an der Vorderseite 11 des Basiskörpers 5 auf. Zur Lagefixierung des Vorsprungs 12 am Basiskörper 5 stehen von der Rückseite 35 des Befestigungsabschnitts 33 zwei Flansche 30 ab, die formschlüssig in den Vertiefungen 29 anordenbar sind bzw. im verbundenen Zustand (vgl. Fig. 11) in den Vertiefungen 29 formschlüssig angeordnet sind. Durch die Flansche 30 sind ausgehend von der Vorderseite 34 des Befestigungsabschnitts 33 Löcher 18 geführt, die die Durchführung von Schrauben 19 ermöglichen, vgl. Fig. 11. Letztere können einerseits zur festen Verbindung des Vorsprungs 12 mit dem Basiskörper 5 dienen und/oder zur Verbindung der Vorrichtung 1 mit dem Ständerprofil 3 oder mit einer (nicht dargestellten) Verbindungsplatte.

Die Anordnung des Vorsprungs 12 ist in den dargestellten Ausführungsbeispielen so, dass die Auflagefläche 20 in den Vorsprung 12, genauer in eine Oberseite 27 des Vorsprungs 12, nahtlos übergeht.

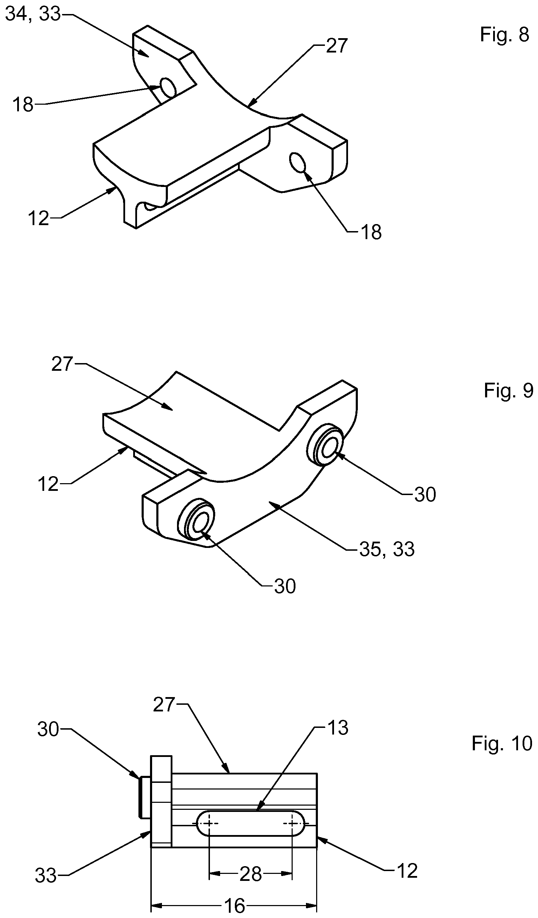

Die für die Auflage der Rohrleitung 2 zur Verfügung stehende Fläche wird durch den Vorsprung 12 bzw. dessen Oberseite 27 beträchtlich vergrößert, was die Gefahr von Beschädigungen der Rohrleitung 2 weiter reduziert. Hierzu trägt weiters auch die Form, insbesondere Krümmung, des Vorsprungs 12 bzw. der Oberseite 27 bei, die in Fig. 4 - aber auch in Fig. 8 und Fig. 9 - besonders gut ersichtlich ist und im Wesentlichen der Krümmung der Auflagefläche 20 entspricht. Wie in Fig. 5 und Fig. 11 erkennbar ist, ähnelt die Krümmung der Oberseite 27 jener der Rohrleitung 2, sodass sich eine abschnittsweise Anpassung der Krümmung der Oberseite 27 an jene der Rohrleitung 2 ergibt, was eine vorteilhafte, besonders großflächige Auflage der Rohrleitung 2 zur Folge hat.

Weiters weist in den dargestellten Ausführungsbeispielen der Vorsprung 12 ein Haltemittel für ein Befestigungsband 14 auf, wobei das Haltemittel jeweils in Form einer Öse 13 ausgebildet ist. Es sei jedoch betont, dass selbstverständlich auch andere Ausbildungen des Haltemittels möglich sind, beispielsweise ein Absatz (nicht dargestellt) im Vorsprung 12.

Das Befestigungsband 14 ist in den dargestellten Ausführungsbeispielen als wiederverschließbares Band, insbesondere mit einem Klettverschluss, ausgeführt und durch die Öse 13 gefädelt (vgl. Fig. 5 bzw. Fig. 11). Mittels des Befestigungsbands 14 (vgl. Fig. 5 und Fig. 11) kann die Rohrleitung 2 sicher am Vorsprung 12 bzw. an der Vorrichtung 1 fixiert werden.

Die Öse 13 ist in den gezeigten Ausführungsbeispielen in Normalrichtung 8 (im Ausführungsbeispiel der Figuren 6 bis 11: wenn der Vorsprung 12 mit dem Basiskörper 5 verbunden bzw. an diesem befestigt ist) elongiert. Typischerweise liegt eine in Normalrichtung 8 gemessene Breite 28 der Öse 13 im Bereich von 5 mm bis 35 mm, im oben angeführten Dimensionierungsbeispiel beträgt sie jeweils 20 mm. Die Breite der Öse 13 ist vorzugsweise auf eine Breite 15 des Befestigungsbands 14 abgestimmt bzw. umgekehrt. Mit zunehmender Breite 15 des Befestigungsbands 14 können entsprechend zunehmende Haltekräfte zur Fixierung der Rohrleitung 2 realisiert werden. Hierbei kann die Breite 15 des Befestigungsbands 14 z.B. mindestens 50%, vorzugsweise mindestens 66%, der Breite 16 des Vorsprungs 12 betragen.

### BEZUGSZEICHENLISTE

- 1: Vorrichtung
- 2: Rohrleitung
- 3: Ständerprofil
- 4: Durchgangsöffnung des Ständerprofils
- 5: Basiskörper
- 6: Durchführungsöffnung
- 7: Durchführungsöffnungsebene
- 8: Normalrichtung
- 9: Befestigungshaken
- 10: Begrenzungsbereich
- 11: Vorderseite des Basiskörpers
- 12: Vorsprung
- 13: Öse
- 14: Befestigungsband
- 15: Breite des Befestigungsbands
- 16: Breite des Vorsprungs
- 17: Positionierelement
- 18: Loch
- 19: Schraube
- 20: Auflagefläche
- 21: Rückseite des Basiskörpers
- 22: Dicke des Basiskörpers
- 23: Höhe des Basiskörpers
- 24: Breite des Basiskörpers
- 25: Durchmesser der Durchführungsöffnung
- 26: Kreisdurchmesser
- 27: Oberseite des Vorsprungs
- 28: Breite der Öse
- 29: Vertiefung
- 30: Flansch
- 33: Befestigungsabschnitt des Vorsprungs
- 34: Vorderseite des Befestigungsabschnitts
- 35: Rückseite des Befestigungsabschnitts

## Patentansprüche

1. Vorrichtung (1) zur Montage von mindestens einer Leitung, insbesondere Rohrleitung (2), an einem eine Durchgangsöffnung (4) aufweisenden Bauteil, wobei das Bauteil ein Ständerprofil (3) ist, wobei die Vorrichtung (1) einen plattenförmigen Basiskörper (5) mit einer sich in einer Durchführungsöffnungsebene (7) erstreckenden Durchführungsöffnung (6) umfasst und wobei mindestens ein Befestigungsmittel (9; 17; 19) vorgesehen ist, um die Vorrichtung (1) derart am Bauteil (3) zu befestigten, dass der Basiskörper (5) zumindest abschnittsweise am Bauteil (3) aufliegt und in einer normal auf die Durchführungsöffnungsebene (7) stehenden Normalrichtung (8) gesehen die Durchführungsöffnung (6) zumindest abschnittsweise innerhalb der Durchgangsöffnung (4) angeordnet ist und wobei das mindestens eine Befestigungsmittel mindestens ein Befestigungselement (9) umfasst, welches in einem die Durchführungsöffnung (6) berandenden Begrenzungsbereich (10) des Basiskörpers (5) und vom Basiskörper (5) abstehend angeordnet ist, um die Vorrichtung (1) derart am Bauteil (3) zu befestigten, dass das mindestens eine Befestigungselement (9) zumindest abschnittsweise innerhalb der Durchgangsöffnung (4) angeordnet ist, wobei das mindestens eine Befestigungselement als elastischer Befestigungshaken (9) ausgeführt ist, der zur Befestigung der Vorrichtung (1) am Bauteil (3) mit diesem verrastbar ist, **dadurch gekennzeichnet, dass** der mindestens eine Befestigungshaken (9) dazu eingerichtet ist, einen Rand der Durchgangsöffnung (4) zumindest abschnittsweise zu umgreifen, und dass der mindestens eine Befestigungshaken (9) mit dem Basiskörper (5) einstückig aus Kunststoff gefertigt ist.

2. Vorrichtung nach Anspruch 1, **dadurch gekennzeichnet, dass** das mindestens eine Befestigungsmittel mindestens ein Positionierelement (17) umfasst, welches in einem die Durchführungsöffnung (6) berandenden Begrenzungsbereich (10) des Basiskörpers (5) und vom Basiskörper (5) abstehend angeordnet und zumindest zur Positionierung des Basiskörpers (5) am Bauteil (3) vorgesehen ist, wobei beim Befestigen der Vorrichtung (1) am Bauteil (3) das mindestens eine Positionierelement (17) zumindest abschnittsweise innerhalb der Durchgangsöffnung (4) anordenbar ist.

3. Vorrichtung (1) nach Anspruch 2, **dadurch gekennzeichnet, dass** das mindestens eine Positionierelement (17) die Form eines Ringsegments aufweist.

4. Vorrichtung (1) nach einem der Ansprüche 1 bis 3, **dadurch gekennzeichnet, dass** das mindestens eine Befestigungsmittel mindestens eine Schraube (19) umfasst und dass zur Aufnahme der mindestens einen Schraube (19) mindestens ein Loch (18) im Basiskörper (5) vorgesehen ist.

5. Vorrichtung (1) nach einem der Ansprüche 1 bis 4, **dadurch gekennzeichnet, dass** das mindestens eine Befestigungsmittel eine Verbindungsplatte umfasst, die mit dem Basiskörper (5) unter zumindest abschnittsweiser Zwischenlage des Bauteils (3) verbindbar, vorzugsweise verschraubbar, ist, um die Vorrichtung (1) am Bauteil (3) zu fixieren.

6. Vorrichtung (1) nach einem der Ansprüche 1 bis 5, **dadurch gekennzeichnet, dass** zur Auflage der mindestens einen Leitung (2) ein Vorsprung (12) vorgesehen ist, der zumindest abschnittsweise in einem die Durchführungsöffnung (6) berandenden Begrenzungsbereich (10) des Basiskörpers (5) angeordnet ist und von einer Vorderseite (11) des Basiskörpers (5) absteht.

7. Vorrichtung (1) nach Anspruch 6, **dadurch gekennzeichnet, dass** ein Haltemittel, insbesondere eine Öse (13), für ein Befestigungsband (14) am Vorsprung (12) angeordnet ist, wobei die mindestens eine Leitung (2) an der Vorrichtung (1) mittels des Befestigungsbands (14) befestigbar ist.

8. Vorrichtung (1) nach einem der Ansprüche 1 bis 7, **dadurch gekennzeichnet, dass** die Vorrichtung (1) ein Befestigungsband (14) umfasst, wobei die Leitung (2) an der Vorrichtung (1) mittels des Befestigungsbands (14) befestigbar ist, und dass das Befestigungsband (14), vorzugsweise lösbar, mit dem Basiskörper (5) verbunden ist.

9. Vorrichtung (1) nach Anspruch 8 und nach Anspruch 7, **dadurch gekennzeichnet, dass** eine Breite (15) des Befestigungsbands (14) mindestens 50%, vorzugsweise mindestens 66%, einer Breite (16) des Vorsprungs (12) beträgt, wobei sich der Vorsprung (12) mit seiner Breite (16) in der Normalrichtung (8) vom Basiskörper (5) weg erstreckt.

10. Vorrichtung (1) nach einem der Ansprüche 1 bis 9, **dadurch gekennzeichnet, dass** die Durchführungsöffnung (6) kreisförmig ist.

11. Vorrichtung (1) nach einem der Ansprüche 1 bis 10, **dadurch gekennzeichnet, dass** die Durchführungsöffnung (6) zumindest abschnittsweise von einer Auflagefläche (20) für die Leitung (2) berandet ist.

12. System mit einer Vorrichtung (1) nach einem der Ansprüche 1 bis 11 und dem Bauteil (3), wobei die Durchgangsöffnung (4) gestanzt ist.

13. System nach Anspruch 12, **dadurch gekennzeichnet, dass** die Durchgangsöffnung (4) kreisförmig ist.

## Claims

1. A device (1) for attaching at least one line, in particular a pipeline (2), to a component having a through-opening (4), wherein the component is a stand profile (3), wherein the device (1) comprises a plate-type main body (5) with a feedthrough opening (6) extending in a feedthrough-opening plane (7), and wherein at least one fastening means (9; 17; 19) is provided in order to fasten the device (1) to the component (3) in such a way that the main body (5) rests at least in sections against the component (3) and, as viewed in a normal direction (8) arranged normal to the feedthrough-opening plane (7), the feedthrough opening (6) is arranged at least in sections within the through-opening (4), and wherein the at least one fastening means comprises at least one fastening element (9), which is arranged in a delimitation region (10) of the main body (5) delimiting the feedthrough opening (6) and is arranged in a manner protruding from the main body (5) so as to fasten the device (1) to the component (3) in such a way that the at least one fastening element (9) is arranged at least in sections within the through-opening (4), wherein the at least one fastening element is embodied as an elastic fastening hook (9), which can be latched with the component (3) in order to fasten the device (1) thereto, **characterised in that** the at least one fastening hook (9) is designed to engage around an edge of the through-opening (4) at least in sections, and **in that** the at least one fastening hook (9) is manufactured integrally with the main body (5) from plastic.

2. The device according to claim 1, **characterised in that** the at least one fastening means comprises at least one positioning element (17), which is arranged in a delimitation region (10) of the main body (5) delimiting the feedthrough opening (6) and protruding from the main body (5) and is provided at least for the positioning of the main body (5) on the component (3), wherein, as the device (1) is fastened to the component (3), the at least one positioning element (17) can be arranged within the through-opening (4) at least in sections.

3. The device (1) according to claim 2, **characterised in that** the at least one positioning element (17) has the form of a ring segment.

4. The device (1) according to any one of claims 1 to 3, **characterised in that** the at least one fastening means comprises at least one screw (19), and **in that** at least one hole (18) is provided in the main body (5) in order to receive the at least one screw (19).

5. The device (1) according to any one of claims 1 to 4, **characterised in that** the at least one fastening means comprises a connection plate, which is connectable, preferably is screwable, to the main body (5) with the component (3) being arranged in-between at least in sections, in order to fix the device (1) to the component (3).

6. The device (1) according to any one of claims 1 to 5, **characterised in that** in order to support the at least one line (2) a protrusion (12) is provided, which is arranged at least in sections in a delimitation region (10) of the main body (5) delimiting the feedthrough opening (6) and protrudes from a front side (11) of the main body (5) .

7. The device (1) according to claim 6, **characterised in that** a holding means, in particular an eyelet (13), for a fastening strap (14) is arranged on the protrusion (12), wherein the at least one line (2) is fastenable to the device (1) by means of the fastening strap (14).

8. The device (1) according to any one of claims 1 to 7, **characterised in that** the device (1) comprises a fastening strap (14), wherein the line (2) is fastenable to the device (1) by means of the fastening strap (14), and **in that** the fastening strap (14) is connected to the main body (5), preferably releasably.

9. The device (1) according to claim 8 and according to claim 7, **characterised in that** a width (15) of the fastening strap (14) is at least 50%, preferably at least 66%, of a width (16) of the protrusion (12), wherein the protrusion (12) extends with its width (16) in the normal direction (8) away from the main body (5).

10. The device (1) according to any one of claims 1 to 9, **characterised in that** the feedthrough opening (6) is circular.

11. The device (1) according to any one of claims 1 to 10, **characterised in that** the feedthrough opening (6) is delimited at least in sections by a supporting surface (20) for the line (2).

12. A system comprising a device (1) according to any one of claims 1 to 11 and the component (3), wherein the through-opening (4) is punched.

13. The system according to claim 12, **characterised in that** the through-opening (4) is circular.

## Revendications

1. Dispositif (1) pour le montage d'au moins une conduite, en particulier d'au moins une tuyauterie (2), sur un élément de construction présentant une ouverture traversante (4), l'élément de construction étant un profilé de support (3), le dispositif (1) comprenant un corps de base (5) en forme de plaque avec une ouverture de passage (6) s'étendant dans un plan d'ouverture de passage (7), et au moins un moyen de fixation (9 ; 17 ; 19) étant prévu pour fixer le dispositif (1) sur l'élément de construction (3) de telle sorte que le corps de base (5) s'appuie au moins par endroits sur l'élément de construction (3) et, vue dans une direction normale (8) perpendiculaire au plan d'ouverture de passage (7), l'ouverture de passage (6) étant disposée au moins par endroits à l'intérieur de l'ouverture traversante (4) et ledit au moins un moyen de fixation comprenant au moins un élément de fixation (9) qui est disposé dans une zone de délimitation (10) du corps de base (5) bordant l'ouverture de passage (6) et fait saillie du corps de base (5) pour fixer le dispositif (1) sur l'élément de construction (3) de telle sorte que ledit au moins un élément de fixation (9) est disposé au moins par endroits à l'intérieur de l'ouverture traversante (4), ledit au moins un élément de fixation étant réalisé sous la forme d'un crochet de fixation élastique (9) qui peut être encliqueté sur l'élément de construction (3) pour fixer le dispositif (1) sur celui-ci, **caractérisé en ce que** ledit au moins un crochet de fixation (9) est conçu pour venir en prise au moins par endroits autour d'un bord de l'ouverture traversante (4), et que ledit au moins un crochet de fixation (9) est fabriqué en matière plastique d'une seule pièce avec le corps de base (5).

2. Dispositif selon la revendication 1, **caractérisé en ce que** ledit au moins un moyen de fixation comprend au moins un élément de positionnement (17) qui est disposé dans une zone de délimitation (10) du corps de base (5) bordant l'ouverture de passage (6) et fait saillie du corps de base (5) et qui est prévu au moins pour positionner le corps de base (5) sur l'élément de construction (3), ledit au moins un élément de positionnement (17) pouvant être disposé au moins par endroits à l'intérieur de l'ouverture traversante (4) lors de la fixation du dispositif (1) sur l'élément de construction (3).

3. Dispositif (1) selon la revendication 2, **caractérisé en ce que** ledit au moins un élément de positionnement (17) présente la forme d'un segment annulaire.

4. Dispositif (1) selon l'une des revendications 1 à 3, **caractérisé en ce que** ledit au moins un moyen de fixation comprend au moins une vis (19) et qu'au moins un trou (18) est prévu dans le corps de base (5) pour recevoir ladite au moins une vis (19).

5. Dispositif (1) selon l'une des revendications 1 à 4, **caractérisé en ce que** ledit au moins un moyen de fixation comprend une plaque de liaison qui peut être reliée, de préférence vissée, au corps de base (5), avec interposition de l'élément de construction (3) au moins par endroits, pour fixer le dispositif (1) sur l'élément de construction (3).

6. Dispositif (1) selon l'une des revendications 1 à 5, **caractérisé en ce qu'**une saillie (12) est prévue pour l'appui de ladite au moins une conduite (2), laquelle saillie (12) est disposée au moins par endroits dans une zone de délimitation (10) du corps de base (5) bordant l'ouverture de passage (6) et fait saillie d'un côté avant (11) du corps de base (5).

7. Dispositif (1) selon la revendication 6, **caractérisé en ce qu'**un moyen de retenue, en particulier un œillet (13), pour une bande de fixation (14) est disposé sur la saillie (12), ladite au moins une conduite (2) pouvant être fixée au dispositif (1) au moyen de la bande de fixation (14).

8. Dispositif (1) selon l'une des revendications 1 à 7, **caractérisé en ce que** le dispositif (1) comprend une bande de fixation (14), la conduite (2) pouvant être fixée au dispositif (1) au moyen de la bande de fixation (14), et que la bande de fixation (14) est de préférence reliée de manière détachable au corps de base (5).

9. Dispositif (1) selon la revendication 8 et selon la revendication 7, **caractérisé en ce qu'**une largeur (15) de la bande de fixation (14) représente au moins 50 %, de préférence au moins 66 %, d'une largeur (16) de la saillie (12), la saillie (12) s'étendant par sa largeur (16) dans la direction normale (8) à partir du corps de base (5).

10. Dispositif (1) selon l'une des revendications 1 à 9, **caractérisé en ce que** l'ouverture de passage (6) est circulaire.

11. Dispositif (1) selon l'une des revendications 1 à 10, **caractérisé en ce que** l'ouverture de passage (6) est au moins partiellement bordée par une surface d'appui (20) pour la conduite (2).

12. Système comportant un dispositif (1) selon l'une des revendications 1 à 11 et l'élément de construction (3), l'ouverture traversante (4) étant poinçonnée.

13. Système selon la revendication 12, **caractérisé en ce que** l'ouverture traversante (4) est circulaire.
